(19) Europäisches Patentamt
European Patent Office
Office européen des brevets

(11) Veröffentlichungsnummer: **0 001 210**
**B1**

(12) # EUROPÄISCHE PATENTSCHRIFT

(45) Veröffentlichungstag der Patentschrift: **01.04.81**

(21) Anmeldenummer: **78100657.2**

(22) Anmeldetag: **14.08.78**

(51) Int. Cl.³: **C 08 G 18/32,** C 07 C 27/00, C 07 C 31/18, C 07 C 47/19, C 07 C 49/17

(54) **Gegenüber Isocyanaten reaktive Gemische, Verfahren zu deren Herstellung un deren Verwendung in einem Verfahren zur Herstellung von Polyurethankunststoffen.**

(30) Priorität: **26.08.77 DE 2738533**

(43) Veröffentlichungstag der Anmeldung: **04.04.79 Patentblatt 79/7**

(45) Bekanntmachung des Hinweises auf die Patenterteilung: **01.04.81 Patentblatt 81/13**

(84) Benannte Vertragsstaaten: **BE CH DE FR GB LU NL**

(56) Entgegenhaltungen:
**DE-A-2 721 186**
**US-A-2 269 935**

(73) Patentinhaber: **BAYER AG, Zentralbereich Patente, Marken und Lizenzen, D-5090 Leverkusen 1, Bayerwerk (DE)**

(72) Erfinder: **Wagner, Kuno, Dr., Am Kiesberg 8, D-5090 Leverkusen (DE)**

**EP 0 001 210 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchgebühr entrichtet worden ist (Art. 99(1) Europäisches Patentübereinkommen).

# Gegenüber Isocyanaten reaktive Gemische, Verfahren zu deren Herstellung und deren Verwendung in einem Verfahren zur Herstellung von Polyurethankunststoffen

Die vorliegende Erfindung betrifft bei Raumtemperatur flüssige, relativ niedrigviskose Gemische aus Formose, in α-Stellung aldolisierten Aldehyden und/oder Ketonen und gegebenenfalls Wasser und/oder kristallinen Mono- oder Di-Sacchariden sowie die Verwendung derartiger Gemische zur Herstellung von Polyurethankunststoffen, insbesondere Schaumstoffen.

Unter «Formose» werden erfindungsgemäss die an sich bekannten Gemische von niedermolekularen Polyhydroxy-Verbindungen (mehrwertigen Alkoholen, Hydroxyaldehyden und Hydroxyketonen) verstanden, welche bei der Kondensation von Formaldehydhydrat entstehen.

Die Herstellung von Gemischen mehrwertiger Alkohole, Hydroxyaldehyde und Hydroxyketone durch Selbstkondensation des Formaldehydhydrats wird in zahlreichen Literaturstellen beschrieben. Beispielsweise seien in diesem Zusammenhang Butlerow und Loew, Annalen 120, 295 (1861), bzw. J. pr. Chem. 33, 321 (1886), Pfeil, chemische Berichte 84, 229 (1951), Pfeil und Schroth, chemische Berichte 85, 303 (1952), R.D. Partridge und A.H. Weiss, Carbohydrate Research 24, 29-44 (1972), die Formosen aus Glycerinaldehyd bzw. Dioxyaceton nach Emil Fischer, die deutschen Patentschriften 822385, 830951 und 884794, die US-Patentschriften 2224910, 2269935 und 2272378 sowie die englische Patentschrift 513708 genannt. Diese bekannten Verfahren des Standes der Technik sind jedoch mit gewissen Nachteilen behaftet (toxikologisch bedenkliche Katalysatoren, schlechte Raum-Zeit-Ausbeuten, gefärbte Nebenprodukte); in jüngster Zeit wurden jedoch von der Anmelderin neue Verfahren entwickelt, nach denen sich in hoher Ausbeute mit gängigen Katalysatoren praktisch farblose und von störenden Nebenprodukten freie Formosen herstellen lassen.

Diese Verfahren werden beispielsweise in den DE-Offenlegungsschriften 2639084, 2714084 und 2714104 beschrieben.

Je nach der Reaktionsführung bei der Formaldehydkondensation lassen sich die Eigenschaften der Formose (mittlere Hydroxylfunktionalität; Verzweigungsgrad; Gehalt an reduzierenden Gruppen) in weiten Grenzen variieren. Im allgemeinen ist das mittlere Molekulargewicht und damit die Hydroxylfunktionalität der Formosen um so höher, je weiter die Kondensationsreaktion geführt wird, d.h. je weniger Restformaldehyd beim Abbruch der Kondensationsreaktion vorhanden ist. So wird etwa, wenn die Kondensationsreaktion bis zu einem Restformaldehydgehalt von 0 bis 1,5 Gew.-% geführt wird, eine Formose erhalten, welche ca. 25 Gew.-% an Anteilen mit 5 C-Atomen, 45 Gew.-% an Verbindungen mit 6 C-Atomen und ca. 20 Gew.-% an Verbindungen mit 7 und mehr C-Atomen enthält. Dagegen werden zusammen nur ca. 10% an Polyolen, Hydroxyketonen und Hydroxyaldehyden mit 2, 3 und 4 C-Atomen erhalten. Dies entspricht einer mittleren Hydroxylfunktionalität von ca. 5.

Durch Abbruch der Formaldehydselbstkondensation bei etwas höheren Restformaldehydgehalten werden, wie oben erläutert, andere Komponentenverteilungen der Startergemische erhalten. So ergibt sich bei einem Abbruch der Kondensationsreaktion bei 2 bis 2,5% Formaldehydgehalt ein Gemisch mehrwertiger Alkohole, Hydroxyaldehyde und Hydroxyketone mit einer mittleren Hydroxylfunktionalität von ca. 4. Noch andere Komponentenverteilungen mit weiter erniedrigter durchschnittlicher Hydroxylfunktionalität werden erhalten, wenn man die Kondensationsreaktion bei Restformaldehydgehalten abbricht, die noch höher liegen als 2,5.

Durch Abmischen der Formose mit di- oder höherfunktionellen niedermolekularen Alkoholen lässt sich gegebenenfalls die Funktionalität der Produkte in gewünschter Weise weiter variieren, wenn bestimmte anwendungstechnische Effekte erreicht werden sollen. Als derartige niedermolekulare mehrwertige Alkohole (Molekulargewichte bis ca. 300) kommen beispielsweise Äthylenglykol, Propandiol-1,2, Propandiol-1,3, Butandiol-1,4, Diäthylenglykol, Dipropylenglykol, Triäthylenglykol, Tetraäthylenglykol, Dibutylenglykol, Glycerin, Trimethylolpropan, Pentaerythrit, Sorbit, Butantriole und Hexantriole sowie Oxäthylierungsprodukte dieser Alkohole bzw. auch hydrierte Formose (Formit) in Frage. Auch die Verwendung von Aminen und/oder Äthanolaminen als Abmischkomponente ist möglich.

Beispiele hierfür sind Mono-, Di- und Triäthanolamin, Mono-, Di- und Trisopropanolamin, N-Alkanolamine, wie N-Methyldiäthanolamin und N-Äthyldiäthanolamin sowie niedere aliphatische Mono- und Polyamine, wie Äthylamin, Äthylendiamin, Diäthylentriamin und Triäthylentetramin.

Gemäss eigenen älteren Vorschlägen (s. insbesondere die bereits oben erwähnten deutschen Offenlegungsschriften 2639084, 2714084 und 2714104) können Formosen als Polyolkomponente im Polyisocyanat-Polyadditionsverfahren zur Herstellung von Polyurethankunststoffen verwendet werden. Es wurde nun gefunden, dass sich auf diese Weise Polyurethankunststoffe, insbesondere Schaumstoffe, mit verbesserter Flammwidrigkeit herstellen lassen, wenn als Ausgangskomponente anstelle der reinen Formose ein Gemisch aus Formose und α-methylolierten Aldehyden und/oder Ketonen eingesetzt wird. Derartige Gemische besitzen im Vergleich zu reiner Formose im allgemeinen eine erniedrigte Viskosität, was anwendungstechnisch von grossem Vorteil ist, weil sich die Gemische leicht dosieren lassen. Die Mischungen aus Formose und α-methylolierten Aldehyden bzw. Ketonen haben darüber hinaus überraschenderweise die Fähigkeit, grosse Mengen an kristallisierten Zuckern (Mono- und/oder Disacchariden) zu lösen; sie sind auch in weiten Grenzen mit Wasserglas

mischbar.

Gegenstand der Erfindung sind somit gegenüber Isocyanaten reaktive Mischungen aus

a) 20 bis 90 Gew.-%, bevorzugt 40 bis75 Gew.-%, (bezogen auf a) + b)) einer Mischung aus mehrwertigen Alkoholen, Hydroxyaldehyden und Hydroxyketonen, welche durch Kondensation von Formaldehydhydrat erhalten wurde,

b) 10 bis 80 Gew.-%, bevorzugt 25 bis 60 Gew.-%, (bezogen auf a) + b)) an in α-Stellung methylolierten, nicht zur Endiolbildung befähigten Aldehyden und/oder Ketonen,

c) 0 bis 50 Gew.-%, vorzugsweise 0,3 bis 30 Gew.-%, besonders bevorzugt 0,8 bis 10 Gew.-% (bezogen auf a) + b)) an Wasser und

d) 0 bis 100 Gew.-%, bevorzugt 10 bis 50 Gew.-% (bezogen auf a) + b)) an Mono- und/oder Disacchariden.

Für die erfindungsgemässen Mischungen kommen im Prinzip beliebige Formosen in Frage; für den erfindungsgemäss bevorzugten Anwendungszweck (Herstellung von Polyurethankunststoffen) setzt man jedoch vorteilhafterweise die nach den oben beschriebenen neueren Verfahren der Anmelderin hergestellten Formosen ein, da diese im allgemeinen farblos und frei von störenden Nebenprodukten sind. Bevorzugt werden solche Formosen verwendet, welche ein mittleres Molekulargewicht zwischen 92 und 360, besonders bevorzugt zwischen 100 und 240, und einen Zuckergehalt (berechnet als Glucose vom Molekulargewicht 180) von 4 bis 85 Gew.-%, besonders bevorzugt 6 bis 72 Gew.-%, aufweisen. Wegen ihres höheren Gehaltes an primären Hydroxylgruppen sind darüber hinaus für manche Anwendungszwecke solche Formosen bevorzugt, welche durch nachträgliche Behandlung mit Formaldehyd in basischen pH-Bereichen α-aldolisiert wurden. Selbstverständlich können erfindungsgemäss auch Formosen eingesetzt werden, welche noch in Form von Halbacetalen gebundenen Formaldehyd enthalten oder durch nachträgliche Behandlung mit Säuren inter- bzw. intramolekular acetalisiert oder ketalisiert wurden. Alle diese Produkte werden von dem Begriff «Formose» im Sinne der vorliegenden Erfindung mitumfasst.

Als Komponente b) in den erfindungsgemässen Gemischen kommen in α-Stellung methylolierte Aldehyde bzw. Ketone in Betracht, welche (im Gegensatz zu den Carbonylverbindungen der Formose) keine α-ständige Hydroxylgruppe enthalten und daher nicht zur Endiolbildung befähigt sind. Diese Aldehyde und Ketone können aliphatischer, cycloaliphatischer und araliphatischer Natur sein; sie weisen vorzugsweise 2 bis 15, besonders bevorzugt 2 bis 9, C-Atome auf.

Beispiele hierfür sind Acetaldehyd, Aceton, Propionaldehyd, Butyraldehyd, Isobutyraldehyd, Methyläthylketon, Cyclopentanon, Cyclohexanon, Mesityloxid, Isophoron, Acetophenon sowie deren Methylolderivate, wie sie durch basenkatalysierte teilweise oder vollständige Aldolisierung mit Formaldehyd an den zur Carbonylgruppe α-ständigen C-Atomen erhältlich sind. Beispiele hierfür sind die Verbindungen der Formeln:

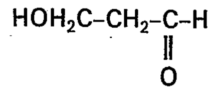
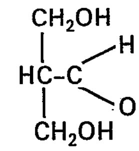
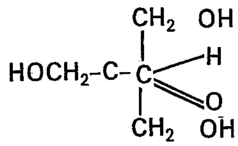
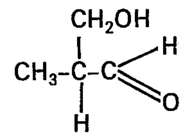
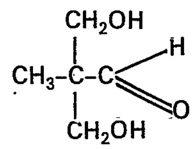
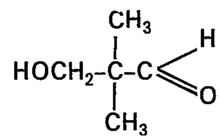
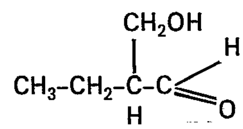
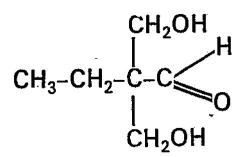
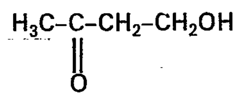
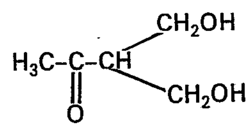
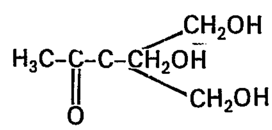
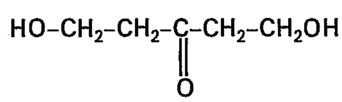
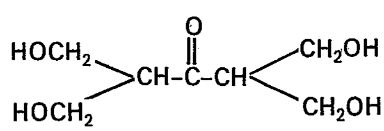
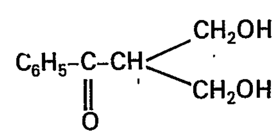
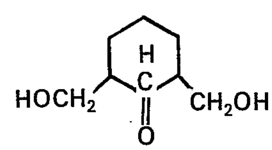
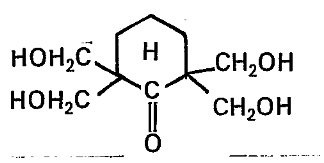

Erfindungsgemäss besonders bevorzugt sind n-Butyraldehyd, Isobutyraldehyd, Aceton und Cyclohexanon bzw. deren Methylolierungsprodukte.

Wie schon erwähnt, sind überraschenderweise in den erfindungsgemässen Gemischen relativ

hohe Mengen an kristallisierten Mono- und Disacchariden wie beispielsweise Glucose, Maltose oder Rohrzucker löslich, ebenso natürliche Invertzucker (beispielsweise Bienenhonig) oder künstliche Invertzucker, z.B. Hydrolysate von Rohrzucker oder auch Hydrolysate von Mais- und Kartoffelstärke und von Pektinstoffen oder Hydrolysate von beliebigen anderen Di- und/oder Polysacchariden, z.B. von Trehalose, Galactose, Raffinose, Zellulose und Dextrinen. Dies ist technisch von besonderem Interesse, weil sich derartige kristallisierte Mono- bzw. Disaccharide in reiner Form nur schwer mit Polyisocyanaten umsetzen lassen.

Die erfindungsgemässen Gemische werden vorzugsweise erhalten, wenn man die Formaldehydkondensation gemäss den oben beschriebenen Verfahren in Gegenwart der genannten α-aldolisierbaren Aldehyde bzw. Ketone oder deren Methylolierungsprodukten ausführt. Obwohl die erfindungsgemäss zuzusetzenden α-aldolisierbaren Carbonylverbindungen, wie oben erläutert, nicht zur Endiolbildung befähigt sind, wurde überraschenderweise gefunden, dass sie bei der Selbstkondensation von Formaldehydhydrat zu Formose eine cokatalytische Funktion ausüben, so dass also der Zusatz der üblichen Cokatalysatoren auf Basis zur Endiolbildung befähigter Verbindungen nicht erforderlich ist.

Gegenstand der vorliegenden Erfindung ist somit auch ein Verfahren zur Herstellung der erfindungsgemässen Gemische, welches dadurch gekennzeichnet ist, dass man 20 bis 65 Gew.-% Formaldehyd enthaltende wässrige Formalinlösungen und/oder Paraformaldehyd-Dispersionen bei pH-Werten zwischen 4 und 9, vorzugsweise zwischen 5 und 8, und bei einer Reaktionstemperatur von 70 bis 110 °C in Gegenwart von

a) löslichen oder unlöslichen Salzen von Metallen der zweiten bis vierten Hauptgruppe oder der ersten bis achten Nebengruppe des periodischen Systems der Elemente oder Ionen dieser Metalle, welche an einem hochmolekularen Träger gebunden sind,

b) zur α-Aldolisierung befähigten Aldehyden und/oder Ketonen bzw. deren α-Methylolierungsprodukten sowie gegebenenfalls

c) Cokatalysatoren auf Basis von zur Endiolbildung befähigten Verbindungen

bis zu einem Restformaldehydgehalt von 0 bis 10 Gew.-%, vorzugsweise 0,5 bis 6 Gew.-%, bezogen auf Reaktionsgemisch, kondensiert, anschliessend den Katalysator in an sich bekannter Weise entfernt und das Reaktionsprodukt auf den gewünschten Wassergehalt einengt.

Man kann, wie schon erwähnt, bei dieser Variante des erfindungsgemässen Verfahrens die obengenannten α-aldolisierbaren Carbonylverbindungen als solche zusetzen, da sie unter den angegebenen Reaktionsbedingungen sehr rasch methyloliert werden. Selbstverständlich ist es jedoch erfindungsgemäss auch möglich, dem Reaktionsansatz von vornherein die α-methylolierten Carbonylverbindungen zuzusetzen. Bevorzugt ist es jedoch, die Formosesynthese mit der Methylolierung der Aldehyde bzw. Ketone zu koppeln. In diesem Fall ist es besonders zweckmässig, zur Steuerung des pH-Wertes organische Basen, vorzugsweise tertiäre Amine, insbesondere sterisch gehinderte lösliche Amine wie z.B. Diisobutylamin, Triisobutylamin, Diisopropylamin, N,N-Dimethylcyclohexylamin oder N-Methyl-isopropylcyclohexylamin einzusetzen, da dann die α-Methylolierungsreaktion unter weitgehender Vermeidung von störenden Cannizzaro- oder gekreuzten Cannizzaro-Reaktionen stattfindet. Die Methylolierung der erfindungsgemäss zuzusetzenden aldolisierbaren Aldehyde und Ketone läuft dabei wesentlich rascher ab als α-Methylolierungsreaktionen der Formose, da die Aldehyd- und Ketogruppen der Formose zum überwiegenden Teil durch Cyclohalbacetal- bzw. -ketalbildung blockiert sind.

Auch Nebenprodukte der technischen Trimethylolpropanherstellung aus Butyraldehyd und Formaldehyd wie z.B. 2-Äthylacrolein können bei der Formaldehydkondensation zu Formose mitverwendet werden, wobei z.B. 2-Äthylacrolein in Gegenwart von tertiären Aminkatalysatoren wie Triisobutylamin in 2,2-Dimethylolalkanal übergeführt wird:

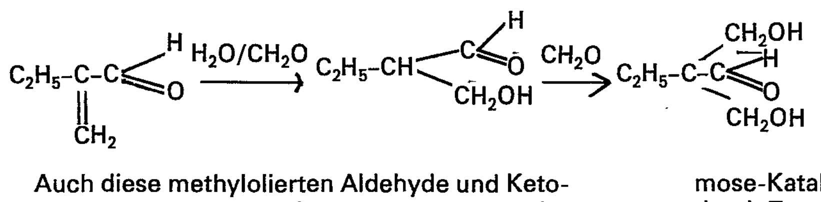


Auch diese methylolierten Aldehyde und Ketone führen zu einer vorteilhaften Erniedrigung der Viskosität der erfindungsgemäss hergestellten Formosen.

Die erfindungsgemässen Mischungen aus Formose und α-methylolierten Carbonylverbindungen können aber auch hergestellt werden, indem man bei der Kondensation von Formaldehyd zu Formose die Reaktion nur bis zu einem Umsatz von 40 bis 95%, vorzugsweise 70 bis 90%, bezogen auf eingesetzten Formaldehyd, ablaufen lässt und – vorzugsweise nach Desaktivierung des Formose-Katalysators – den restlichen Formaldehyd durch Zusatz von α-methylolierten, nicht zur Endiolbildung befähigten Carbonylverbindungen abfängt. Bevorzugt arbeitet man dabei in einem pH-Bereich zwischen 7 und 9 in Gegenwart der üblichen anorganischen Basen oder – falls Cannizzaro-Reaktionen vermieden werden sollen – in Gegenwart der oben erwähnten organischen Basen.

Gegenstand der Erfindung ist somit auch ein Verfahren zur Herstellung der erfindungsgemässen Gemische aus Formose und α-methylolier-

ten, nicht zur Endiolbildung befähigten Carbonylverbindungen, welches dadurch gekennzeichnet ist, dass man 20 bis 65 Gew.-% Formaldehyd enthaltende wässrige Formalinlösungen und/oder Paraformaldehyd-Dispersionen bei pH-Werten zwischen 4 und 9, vorzugsweise zwischen 5 und 8, bei einer Reaktionstemperatur von 70 bis 110 °C in Gegenwart von

a) löslichen oder unlöslichen Salzen von Metallen der zweiten bis vierten Hauptgruppe oder der ersten bis achten Nebengruppe des periodischen Systems der Elemente oder Ionen dieser Metalle, welche an einen hochmolekularen Träger gebunden sind, sowie

b) eines Cokatalysators auf Basis von zur Endiolbildung befähigten Verbindungen

bis zu einem Umsatz von 40 bis 95%, vorzugsweise 70 bis 90%, bezogen auf eingesetzten Formaldehyd, zu Gemischen von niedermolekularen mehrwertigen Alkoholen, Hydroxyaldehyden und Hydroxyketonen kondensiert, den Restformaldehyd durch Zusatz α-aldolisierbarer, nicht zur Endiolbildung befähigter Carbonylverbindungen bindet und anschliessend das Reaktionsprodukt in an sich bekannter Weise vom Katalysator befreit und auf den gewünschten Wassergehalt einengt.

Bezüglich der in den bisher genannten beiden Verfahrensvarianten zur Herstellung der erfindungsgemässen Gemische einzusetzenden Katalysatoren bzw. Cokatalysatoren sei auf die Offenbarung der deutschen Offenlegungsschriften 2 639 084, 2 714 084 und 2 714 104 verwiesen.

Selbstverständlich ist es jedoch auch möglich, die erfindungsgemässen Gemische dadurch herzustellen, das man in eine nach beliebigen Verfahren hergestellte formaldehydfreie wässrige oder alkoholische Formoselösung die α-aldolisierbaren Carbonylverbindungen einbringt oder umgekehrt, anschliessend die für den gewünschten Methylolierungsgrad erforderliche Menge an wässrigem Formaldehyd zusetzt, die Carbonylverbindugnen methyloliert und anschliessend das überschüssige Wasser, beispielsweise im Dünnschichtverdampfer bei einem Vakuum von 1 bis 18 Torr und einer Temperatur zwischen 35 und 60 °C, entfernt. Im allgemeinen setzt man bei dieser Herstellungsvariante für die erfindungsgemässen Gemische ca. 20 bis 300%, vorzugsweise 50 bis 150%, der für eine vollständige Methylolierung der α-aldolisierbaren Carbonylverbindungen erforderliche Menge an Formaldehyd zu. Auch bei dieser nachträglichen Methylolierung arbeitet man vorzugsweise in einem pH-Bereich zwischen 7 und 9, besonders bevorzugt zwischen 7,5 und 8, und bei Temperaturen zwischen 10 und 65 °C, besonders bevorzugt zwischen 20 und 50 °C, in Gegenwart der obenerwähnten organischen Basen.

Gegenstand der Erfindung ist daher auch ein Verfahren zur Herstellung der erfindungsgemässen Gemische aus Formose und α-methylolierten, nicht zur Endiolbildung befähigten Cabonylverbindungen, welches dadurch gekennzeichnet ist, dass man eine wässrige oder alkoholische Lösung eines Gemisches niedermolekularer mehrwertiger Alkohole, Hydroxyaldehyde und Hydroxyketone, welches durch Selbstkondensation von Formaldehydhydrat erhalten wurde, mit den α-aldolisierbaren Carbonylverbindungen mischt, dann durch Zusatz von wässrigem Formaldehyd methyloliert und gegebenenfalls anschliessend die überschüssige Menge Wasser in an sich bekannter Weise entfernt.

Setzt man bei dieser nachträglichen Modifizierung von Formose mehr als die für eine vollständige Methylolierung der zugesetzten aldolisierbaren Carbonylverbindungen erforderliche Menge an Formaldehyd zu, so treten in verstärktem Ausmass auch Methylolierungsreaktionen an den α-ständigen Kohlenstoffatomen von Carbonylgruppen der Formose auf.

Durch diese α-Methylolierung wird die Funktionalität und Reaktivität der Verfahrensprodukte gegenüber Isocyanaten erhöht, da in die Formose zusätzliche primäre Hydroxylgruppen eingeführt werden. Diese Aldolisierungsreaktionen laufen über die im Gleichgewicht mit den Cyclohalbacetalen der Zucker vorliegenden offenkettigen Formen der Zucker ab.

Erfindungsgemäss ist es möglich, die α-Methylolierungsreaktionen in Form einer heterogenen Katalyse durch Zusatz von mässig bis stark basischen Ionenaustauschern zu beschleunigen, wodurch die üblicherweise bei höheren pH-Werten auftretenden Karamelisierungsreaktionen der Zucker stark zurückgedrängt und die während der Formosesynthese entstehenden Säuren teilweise gebunden werden.

Selbstverständlich kann man die eben beschriebenen Herstellungsverfahren für die erfindungsgemässen Gemische auch kontinuierlich in einem Reaktionsrohr ausführen. Zwecks Einstellung des gewünschten pH-Wertes im Reaktionsvolumen wird hierbei an einer oder mehreren Stellen des Rohres kontinuierlich die anorganische oder organische Base in der notwendigen Menge hinzugefügt. Auch in diesem Falle ist es möglich, durch Variation der Durchflusszeiten Produktverteilung und Hydroxylfunktionalität der resultierenden Gemische in weiten Grenzen zu verändern.

Selbstverständlich ist es möglich, wenn auch weniger bevorzugt, die erfindungsgemässen Gemische auch durch einfaches Vermischen von nach beliebigen Verfahren hergestellten formaldehydfreien wässrigen Formoselösungen mit den methylolierten Aldehyden bzw. Ketonen herzustellen.

In analoger Weise kann man auch die oben näher beschriebenen kristallinen Zucker in die erfindungsgemässen Mischungen einbringen, indem man die Zucker zu einem beliebigen Zeitpunkt während oder nach der Herstellung der erfindungsgemäss modifizierten Formose dieser zusetzt.

In die erfindungsgemässen Gemische können bis zu 150 Gew.-%, vorzugsweise 10 bis 100 Gew.-%, an Füllstoffen wie beispielsweise Aluminium-oxidhydrat eingerührt werden, wobei stabile, nicht sedimentierende, pastenartige Dispersionen entstehen. Diese Dispersionen eignen sich hervorragend für die Herstellung von füllstoffhaltigen Polyurethanschaumstoffen.

Wie schon mehrfach erwähnt, liegt der Hauptverwendungszweck der erfindungsgemässen Gemische in der Herstellung von besonders flammfesten Polyurethan-Kunststoffen, insbesondere Polyurethan-Schaumstoffen.

Gegenstand der vorliegenden Erfindung ist somit auch ein Verfahren zur Herstellung von ggf. zellförmigen Polyurethan-Kunststoffen durch Umsetzung von

A) Polyisocyanaten mit

B) Polyhydroxylverbindungen mit einem Molekulargewicht unter 400, ggf.

C) Polyhydroxylverbindungen mit einem Molekulargewicht zwischen 400 und 10000 sowie ggf. weiteren gegenüber Isocyanaten reaktiven Verbindungen, ggf. in Gegenwart von

D) Treibmitteln, Katalysatoren, Füllstoffen und weiteren an sich bekannten Zusatzstoffen,

welches dadurch gekennzeichnet ist, dass als Komponente B) die erfindungsgemässen Gemische eingesetzt werden.

Da in den erfindungsgemässen Gemischen im allgemeinen mehr oder weniger grosse Mengen an Wasser enthalten sind (das Wasser lässt sich aus Formosegemischen nur unter grösserem technischen Aufwand vollständig entfernen), eignen sich die erfindungsgemässen Gemische insbesondere zur Herstellung von Polyurethan-Schaumstoffen. Je nach der verwendeten Rezeptur können dabei erfindungsgemäss sowohl offenzellige als auch geschlossenzellige Polyurethan-Hartschaumstoffe als auch offenzellige Weichschaumstoffe hergestellt werden.

Für die Herstellung von offenzelligen Hartschaumstoffen wählt man zweckmässigerweise solche erfindungsgemässen Gemische aus, welche zwischen 4 und 25 Gewichtsprozent, besonders bevorzugt zwischen 8 und 20% Wasser enthalten. Gegebenenfalls können auch die oben beschriebenen Suspensionen von Aluminiumoxydhydrat bzw. anderen mineralischen Füllstoffen in den erfindungsgemässen Gemischen eingesetzt werden. Gegebenenfalls kann man auch bis zu 100 Gew.-%, vorzugsweise 10 bis 50 Gew.-%, bezogen auf gesamte Polyolkomponente, einer höher molekularen Polyhydroxylverbindung (Molekulargewicht ca. 40–10000) als elastifizierende Komponente mitverwenden. Die Menge des Polyisocyanates in der Rezeptur kann in weiten Grenzen schwanken; es ist möglich, sowohl einen Überschuss an Polyisocyanat (bis zu 120% der berechneten äquivalenten Menge) als auch eine weniger als äquivalente Menge an Polyisocyanat, berechnet auf die Summe der vorhandenen, gegenüber Isocyanaten reaktiven Komponenten, einsetzen. Es wurde jedoch gefunden, dass die Flammwidrigkeit der so erhaltenen Schaumstoffe umso höher liegt, je kleiner die Kennzahl der Rezeptur (Äquivalentverhältnis von Polyisocyanaten und gegenüber Isocyanaten reaktiven Verbindungen) ist. Vorzugsweise arbeitet man daher im Kennzahlbereich zwischen 20 und 70, besonders bevorzugt zwischen 30 und 60, insbesondere zwischen 35 und 55.

Für die Herstellung von geschlossenzelligen Hartschaumstoffen wählt man vorzugsweise solche erfindungsgemässen Gemische aus, welche 0 bis 4%, besonders bevorzugt 0,7 bis 3 Gew.-%, an Wasser enthalten. Die Verschäumung wird in diesem Falle durch den Zusatz von niedrig siedenden Flüssigkeiten, wie z.B. Fluortrichlormethan, bewirkt. Bezüglich der Kennzahl der Rezepturen gilt dasselbe, was bereits bei den offenzelligen Hartschaumstoffen ausgeführt wurde.

Die erfindungsgemässen Mischungen können jedoch auch in Anteilen von 5 bis 30 Gew.-%, bevorzugt 5 bis 20 Gew.-%, bezogen auf gesamte Polyolkomponente, als Vernetzer bei der Herstellung von offenzelligen Weichschaumstoffen mitverwendet werden. Der Rest der Polyol-Komponente besteht in diesem Fall aus Polyhydroxylverbindungen mit einem Molekulargewicht von 400 bis 10000, vorzugsweise aus Polyäther-Polyolen.

Für die Herstellung der gegebenenfalls zellförmigen Polyurethankunststoffe kommen als Komponenten A, C und D alle jene an sich bekannten Stoffe in Betracht, welche auf den Seiten 18 bis 27 der Europäischen Offenlegungsschrift 0001210 bzw. der dort zitierten Literatur beschrieben werden.

Die ausschliessliche Umsetzung der erfindungsgemässen Gemische (ohne Mitverwendung anderer gegenüber Isocyanaten reaktiver Komponenten) mit stark elastifizierenden Polyisocyanaten, wie z.B. Polyisocyanaten mit Biuretstruktur (DAS 1543178) führt zu harten, lichtechten, kratz- und lösungsmittelfesten Beschichtungen und Lacken.

Durch Propoxylierung oder/und Oxyäthylierung der Polyole lassen sich ferner Polyätheralkohole hoher Funktionalität gewinnen, die in hohen OH-Zahl-Bereichen für die Herstellung von harten bzw. halbharten zellförmigen Polyurethankunststoffen und bei niedrigen OH-Zahlen als Ausgangsmaterialien für hochelastische Polyurethanschaumstoffe Verwendung finden (s. DOS 2639083).

Durch Umsetzung der erfindungsgemäss hergestellten Gemische aus mehrwertigen Alkoholen mit mehrwertigen Carbonsäuren der oben genannten Art, z.B. Phthalsäure, Isophthalsäure, Terephthalsäure, Tetra- und Hexahydrophthalsäure, Adipinsäure oder Maleinsäure nach den üblichen Verfahren der Polyesterkondensation, wie sie beispielsweise in Houben-Weyl, Methoden der organischen Chemie, Bd. XIV 12, S. 40 beschrieben sind, lassen sich stark vernetzte Polyester synthetisieren, die als Zusätze zu Alkydharzen deren Härte verbessern. Die Hydroxylgruppen enthaltende Polyester, die aus den erfindungsgemäss hergestellten Hydroxylverbindungen synthetisiert werden, sind selbstverständlich ebenfalls als Ausgangskomponente zur Herstellung von Polyurethankunststoffen brauchbar.

Für viele Zwecke ist es bevorzugt, die erfindungsgemässen Gemische vor ihrer Verwendung als Starter bei der Herstellung von Polyätherpolyolen nicht wie in der oben erwähnten DOS 2 639 083 vorher zu hydrieren sondern direkt in unreduzierter Form in Gegenwart saurer Katalysatoren, z.B. bevorzugt mit üblichen Lewis-Säuren wie Bortrifluoridätherat, dem Komplex aus Bortrifluorid und Essigsäure oder Acetanhydrid, Antimontrichlorid, Aluminiumchlorid etc. – gegebenenfalls nur partiell – zu oxäthylieren und/oder propoxylieren.

Hierbei findet gleichzeitig in einem Arbeitsgang eine nennenswerte Acetalisierung bzw. Ketalisierung durch ringöffnende Addition des Oxirans gemäss folgendem Schema an den Carbonylfunktionen der Formose-Zuckergemische bzw. der methylolierten Carbonylverbindungen statt:

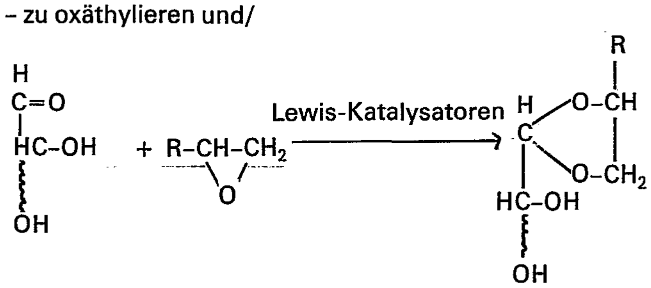


R = z.B. $CH_3$ oder H.

Nach dem gleichen Schema werden Ketogruppen in den Formosen ketalisiert. Die Reaktion kann jedoch auch so gelenkt werden, dass die Oxirane in hohen Ausbeuten an den Hydroxylgruppen der Formosen unter Bildung von Polyätherpolyolen polyaddieren.

Die Lewis-Säure-katalysierte Polyaddition des Propylenoxids an Formose läuft offenbar ziemlich selektiv nach folgendem Schema ab:

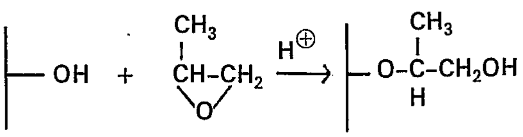

führt also zu primären Hydroxylgruppen, während die mit Basen katalysierte Polyaddition statistisch erfolgt und daher mindestens 50% an sekundären Hydroxylgruppen im Polyäther vorliegen.

Durch Umsetzung der erfindungsgemäss erhaltenen Gemische mit Säureanhydriden bzw. gemischten Säureanhydriden, Acrylnitril, Gylkolcarbonat, Epichlorhydrin oder Dimethylsulfat entstehen ebenfalls technisch interessante Zwischenprodukte. Insbesondere sei hier auf die Cyanäthylierung der Formosen mit 1–50 Gew.-% (bezogen auf Formose) an Acrylnitril hingewiesen, die vorzugsweise in Gegenwart basischer Katalysatoren bei pH-Werten von 7,5–9 im Temperaturbereich von 40–100 °C, besonders bevorzugt 60–90 °C, stattfindet. Bei der Hydrierung der Cyanäthylierungsprodukte entstehen Aminozukker, die von grossem Interesse für die Herstellung von Polyurethanharnstoffen und als Härter für Polyepoxide sind.

Wie schon erwähnt, bilden die erfindungsgemässen Gemische lagerstabile Mischungen mit Wasserglas (Natrium- bzw. Kaliumsilikat). Im allgemeinen setzt man dabei 100 Gew.-Teilen des erfindungsgemässen Gemisches ca. 10 bis 100 Gew.-Teile Wasserglas zu. Derartige Gemische eignen sich vorzüglich als Bindemittel, aber auch als Ausgangskomponente für die Herstellung von anorganisch-organischen Schaumstoffen durch Umsetzung mit Polyisocyanaten bzw. mit Isocyanatgruppen aufweisenden Präpolymeren nach den Verfahren der deutschen Offenlegungsschriften 1 770 384, 2 359 606, 2 359 607, 2 359 608, 2 359 609, 2 359 610 und 2 359 611.

Die erfindungsgemässen Gemische eignen sich darüber hinaus, wie gefunden wurde, auch als Abmischkomponente für die oben beschriebenen höhermolekularen Polyhydroxylverbindungen und führen dabei überraschenderweise zu einer besseren Verträglichkeit verschiedener derartiger Polyole untereinander bzw. mit den übrigen Komponenten einer Polyurethanrezeptur.

Die folgenden Beispiele erläutern die vorliegende Erfindung. Sofern nicht anders vermerkt, sind Mengenangaben als Gewichtsteile bzw. Gewichtsprozente zu verstehen.

In den Beispielen 1 bis 5 wird eine Formose-Synthese in Gegenwart eines zur α-Aldolisierung befähigten Ketons bzw. Aldehyds bzw. deren α-Methylolierungsprodukten (entsprechend Patentanspruch 3) beschrieben. Die Beispiele 6 bis 8 beschreiben jene Verfahrensvariante, in welcher der Restformaldehydgehalt bei der Formose-Synthese durch Reaktion mit einem α-aldolisierbaren, nicht zur Endiolbildung befähigten Aldehyd bzw. Keton gebunden wird.

Beispiel 1

1000 g (12,33 Mol) einer 37%igen handelsüblichen, mit Methanol stabilisierten wässrigen Formalinlösung werden mit 33 g Cyclohexanon und 5 g Bleiacetat [$Pb(CH_3COO)_2 \cdot 3\ H_2O$] gemischt und auf 95 °C aufgeheizt. Durch stetige Zudosierung von 10%iger wässriger NaOH wird der pH-Wert des Reaktionsgemisches auf 6,5 bis 7 eingestellt. Nach Zugabe von 210 ml NaOH ist der Formaldehydgehalt der Mischung auf 1,25% abgesunken. Die anfangs trübe Lösung ist zu Ende der Reaktion völlig klar. Der Ansatz wird abgekühlt und über Ionenaustauscher entsalzt. Durch Einengen am Rotationsverdampfer erhält man

382 g eines schwach gelben Reaktionsproduktes, das 6,4% $H_2O$ enthält und einen Zuckergehalt von 55,2%, berechnet als Glucose, aufweist.

Nach Hydrierung der Formose und Silylierung des so erhaltenen Formits ergibt die gaschromatographische Analyse folgende Komponentenverteilung:

| | $C_2$ | $C_3$ | $C_4$ | $C_5$ | $C_6$ | $C_7$ | $C_8$ |
|---|---|---|---|---|---|---|---|
| % | 0,27 | 2,74 | 4,73 | 16,73 | 43,39 | 20,84 | 4,23 |

Der Formit enthält 7,07% an Tetramethylolcyclohexanol.

Beispiel 2

1000 g der 37%igen Formalinlösung aus Beispiel 1 werden mit 66 g Cyclohexanon und 5 g $Pb(CH_3COO)_2 \cdot 3\ H_2O$ gemischt und auf 95°C aufgeheizt. Durch laufende Zudosierung von 10%iger NaOH wird der pH-Wert des Reaktionsgemisches auf 5 bis 5,5 eingestellt. Nach Zugabe von 315 ml NaOH ist der Formaldehydgehalt der Mischung auf 1,14% abgesunken. Die anfangs trübe Lösung ist zu Ende der Reaktion völlig klar. Der Ansatz wird abgekühlt und über Ionenaustauscher entsalzt. Beim Einengen im Rotationsverdampfer erhält man 369 g eines farblosen Reaktionsproduktes, das 5,2% $H_2O$ enthält und einen Zuckergehalt von 54,1%, berechnet als Glucose, aufweist.

Nach der Hydrierung der Formose und Silylierung des so erhaltenen Formits ergibt die gaschromatographische Analyse folgende Komponentenverteilung:

| | $C_2$ | $C_3$ | $C_4$ | $C_5$ | $C_6$ | $C_7$ | $C_8$ |
|---|---|---|---|---|---|---|---|
| % | 0,25 | 2,5 | 3,6 | 18,82 | 36,94 | 18,80 | 6,05 |

Der Formit enthält 13,03% an Tetramethylolcyclohexanol.

Beispiel 3

1500 g der 37%igen Formalinlösung aus Beispiel 1 (18,5 Mol HCHO) und 491 g Cyclohexanon (5 Mol) werden unter Rühren auf 95°C aufgeheizt und mit 56 g einer 50%igen wässrigen Lösung der in Beispiel 1 von DOS 2 639 084 als Cokatalysator verwendeten Formose sowie 15 g Bleiacetattrihydrat versetzt. Der pH-Wert des Gemisches wird mit 10%iger Natronlauge auf 7,5 gebracht und nach Anspringen der Reaktion (Anstieg der Temperatur auf 100 bis 102°C) durch weiteren Laugenzusatz zwischen 6,5 und 7,0 gehalten. Nach ca. 20 Minuten wird die Reaktion bei einem Restformaldehydgehalt von 1,5% durch Kühlen mit Eiswasser abgebrochen. Gesamtverbrauch an 10%iger Natronlauge: 123 g. Mit 10 g $NaHCO_3$ wird die Hauptmenge des Bleis ausgefällt und die Lösung nach Absaugen vom Niederschlag über Ionenaustauscher vollentsalzt. Es werden 800 g einer modifizierten Formose mit einem Wassergehalt von 5,8% und einem Zuckergehalt von 37% (berechnet als Glucose) erhalten.

Die Viskosität der modifizierten Formose bei 20°C und bei einem Wassergehalt von 10% beträgt 5000 mPa.s. Eine analog dazu ohne Zusatz von Cyclohexanon hergestellte Formose hat erst bei 50°C eine vergleichbare Viskosität von 5300 mPa.s.

Beispiel 4

Man geht vor wie in Beispiel 3, verwendet jedoch als Katalysator anstelle von Bleiacetat 18,5 g pulverförmiges Calciumhydroxid (0,25 Mol), welches portionsweise dem Reaktionsansatz zugesetzt wird. Hierdurch stellt sich ein Anfangs-pH-Wert von 7,0 bis 7,5 ein. Anschliessend wird das Reaktionsgemisch durch Zusatz von 10%iger Natronlauge (Gesamtverbrauch 395 g) bei pH 7,0 bis 8,0 gehalten. Bei einem Restformaldehydgehalt von 0,4% wird die Reaktion nach etwa 30 Minuten durch Kühlen mit Eiswasser abgebrochen und das Calcium mit 0,25 Mol verdünnter Schwefelsäure als Sulfat gefällt. Nach Absaugen vom Niederschlag wird die Lösung über Ionenaustauscher vollentsalzt und eingeengt. Es werden 850 g einer modifizierten Formose mit einem Wassergehalt von 5,1% und einem Zuckergehalt von 16,6% erhalten. Die Viskosität der 10% Wasser enthaltenden Formose bei 20°C beträgt 13 300 mPa.s.

Die Viskosität einer analog dazu ohne Zusatz von Cyclohexanon hergestellten Formose liegt bei einem Wassergehalt von 10% bei 20°C über 100 000 mPa.s.

Beispiel 5

1500 g der 37%igen Formalinlösung aus Beispiel 1 (18,5 Mol Formaldehyd) werden zusammen mit 288 g n-Butyraldehyd (4 Mol) zum Rückfluss erhitzt (ca. 75°C). Nach Zugabe von 56 g derselben Co-Katalysatorlösung wie in Beispiel 3 und 15 g Bleiacetattrihydrat wird der pH-Wert der Lösung mit 10%iger Natronlauge auf 8,0 gebracht. Nach Anspringen der Reaktion wird der pH-Wert durch Zusatz weiterer Lauge zwischen 6,5 und 7,5 gehalten (insgesamt werden 296 g 10%iger Natronlauge verbraucht). Nach 70 Minuten Reaktionsdauer wird die Umsetzung bei einem Restformaldehydgehalt von 1,2% durch Kühlen mit Eiswasser abgebrochen. Nach Neutralisieren mit 7%iger Salpetersäure wird das Produkt über Ionenaustauscher vollentsalzt und am Dünnschichtverdampfer zu 760 g eines 10% Wasser enthaltenden dünnflüssigen Sirups mit einem Zuckergehalt von 37,5% und einer Viskosität von 9600 mPa.s/20°C eingeengt.

Beispiel 6

1500 g der 37%igen Formalinlösung aus Beispiel 1 (18,5 Mol HCHO) werden unter Rühren auf 95°C erhitzt und mit 56 g der in Beispiel 3 verwendeten Co-Katalysatorlösung sowie 15 g Bleiacetattrihydrat versetzt. Der pH-Wert der Lösung wird mit 10%iger Natronlauge auf 7,5 eingestellt,

worauf die Reaktion anspringt. Durch wiederholten Laugenzusatz wird der pH-Wert des Reaktionsgemisches zwischen 6,5 und 7,0 gehalten (Gesamtverbrauch an 10%iger Natronlauge: 188 g). Nach ungefähr 10 Minuten enthält das Gemisch noch 15,1% Formaldehyd. Es werden nun 230 g n-Butyraldehyd (3,2 Mol) innerhalb von 10 Minuten zugegeben. Hierbei sinkt der pH-Wert der Lösung auf 5,4, die Innentemperatur auf 75 °C und der Formaldehydgehalt auf 9,8%. Im pH-Bereich 6,5 bis 7,5 und bei einer Innentemperatur von 75 bis 85 °C wird die Reaktion unter Zusatz von Lauge weitergeführt und bei einem Restformaldehydgehalt von 1,5% durch Kühlen mit Eiswasser nach insgesamt 65 Minuten abgebrochen.

Nach der Vollentsalzung mittels Ionenaustauschern und Einengen am Rotationsverdampfer erhält man eine 10% Wasser enthaltende Formose mit einem Zuckergehalt von 57%, berechnet als Glucose, und einer Viskosität von 80 200 mPa.s/20 °C.

Beispiel 7

Der Reaktionsansatz von Beispiel 6 wird mit 10%iger Natronlauge bei 100 °C auf pH 6,5 eingestellt, wobei die Kondensationsreaktion anspringt. Nach 10 Minuten ist der Formaldehydgehalt der Lösung auf 15,6% abgesunken. Nun werden 288 g Isobutyraldehyd (4 Mol) im Verlauf von 10 Minuten zugegeben. Bis zur Beendigung der Reaktion wird das Gemisch bei 65 bis 74 °C und in einem pH-Bereich von 6,8 bis 7,2 gehalten (Gesamtverbrauch an 10%iger Natronlauge: 196 g). Die Reaktion wird durch Kühlen mit Eiswasser bei einem Restformaldehydgehalt von 1,7% nach 165 Minuten abgebrochen.

Nach der Vollentsalzung mittels Ionenaustauschern erhält man durch Entfernung der Hauptmenge an Wasser eine 10% Wasser enthaltende modifizierte Formose mit einem Zuckergehalt von 41,3%, berechnet als Glucose, und einer Viskosität von 24 300 mPa.s/20 °C.

Beispiel 8

Der Reaktionsansatz von Beispiel 6 wird mit 10%iger Natronlauge bei 100 °C auf 6,8 eingestellt, wobei die Kondensationsreaktion anspringt. Nach 15 Minuten ist der Formaldehydgehalt der Lösung auf 17,2% gesunken. Man lässt nun 393 g Cyclohexanon (4 Mol) innerhalb von 5 Minuten zulaufen, wobei der pH-Wert des Reaktionsgemisches auf 5,7 fällt. Anschliessend wird der pH-Wert zwischen 6,0 und 6,2 gehalten (Gesamtverbrauch an 10%iger Natronlauge: 112 g). Die Reaktion wird bei einem Restformaldehydgehalt von 1,8% nach 37 Minuten durch Kühlen mit Eiswasser abgebrochen.

Nach der Vollentsalzung mittels Ionenaustauschern erhält man durch Entfernung der Hauptmenge an Wasser eine 10% Wasser enthaltende modifizierte Formose mit einem Zuckergehalt von 55,4%, berechnet als Glucose, und einer Viskosität von 53 200 mPa.s/20 °C.

Beispiel 9

Dieses Beispiel zeigt, dass die erfindungsgemässen Mischungen auch dadurch hergestellt werden können, dass man nach beliebigen Verfahren hergestellte wässrige oder alkoholische Formosen bzw. α-aldolisierte Formosen mit wässrigem Formaldehyd mischt und anschliessend durch Zugabe von Aldehyden bzw. Ketonen den freien Formaldehyd zur α-Methylolierung der Aldehyde und Ketone verwendet. Wie Parallelversuche zeigen, wird hierbei in einer Nebenreaktion nicht α-aldolisierte Formose etwa zu 30 Gew.-% in α-Stellung zu den Carbonylgruppen ebenfalls methyloliert.

a) 100 g einer vorgebildeten, vollentsalzten 50%igen Formoselösung, die nach der Verfahrensweise der DOS 2 639 084 hergestellt wurde, werden mit 200 g einer 30%igen Formaldehydlösung (2 Mol) und 72 g n-Butyraldehyd (1 Mol) zu einer Dispersion gemischt. Unter intensivem Rühren wird die Mischung nach Zugabe von 4 g Dimethylbenzylamin auf 70 °C erwärmt. Im Verlaufe von 4 weiteren Stunden wird durch stetige Zugabe von weiteren 11 Gewichtsteilen Dimethylbenzylamin bei pH = 8,5 die Temperatur des Ansatzes bis auf 95 °C gesteigert.

Nach der Vollentsalzung mittels Ionenaustauschern und Eindestillation der Mischung im Rotationsverdampfer bei 55 °C und 16 Torr auf einen Wassergehalt von ca. 5,6% wird eine modifizierte Formose mit einer Viskosität von 109 112 mPa.s. bei 25 °C erhalten, während die eingesetzte vollentsalzte Ausgangsformose bei einem Wassergehalt von 5,6% eine bei 25 °C nicht messbare Viskosität besitzt, die aufgrund von Extrapolationskurven über 550 000 mPa.s bei 25 °C liegt.

b) Die verwendete α-aldolisierte Formose wird wie folgt hergestellt:

500 g einer vollentsalzten, 50 Gew.-% Formose enthaltenden wässrigen Lösung, die gemäss Beispiel 1 der DOS 2 639 084 hergestellt wurde (250 g Formose-Feststoff; mittleres Molekulargewicht ca. 166; ca. 1,5 Mol) werden mit 150 g einer 30%igen Formalinlösung (ca. 1,5 Mol) und 10 g Triäthylamin vermischt. Man heizt unter Rühren auf 85 °C auf und verfolgt die Formaldehydabnahme durch Titration mit Natriumsulfit. Bereits nach 45 Minuten ist der Formaldehydgehalt in der Lösung von 6,3% auf 0,5% abgesunken und die α-Aldolisierung beendet. Man klärt die heisse Lösung durch Zugabe von 8 g Aktivkohle, filtriert und erhält eine lediglich leicht gelblich gefärbte Lösung, in der vorwiegend α-aldolisierte Formosen der nachstehenden idealisierten Konstitutionen vorliegen:

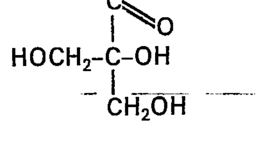

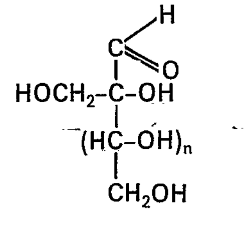

n = 1–7

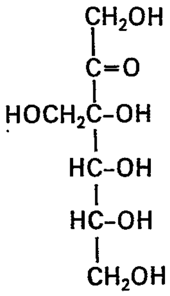

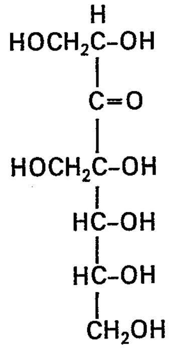

Durch die gezielte α-Aldolisierung werden Formosen erhalten, die pro Molekül im Mittel mindestens zwei primäre Hydroxylgruppen enthalten und gegenüber Polyisocyanaten eine höhere Reaktivität aufweisen als die Ausgangsformosen.

Überaschenderweise ist bei dieser Arbeitsweise die α-Aldolisierung gegenüber möglichen gekreuzten Cannizzaro-Reaktionen stark bevorzugt: Wie aus der analytisch ermittelten Triäthylammoniumformiatbildung geschlossen werden kann, geben lediglich etwa 3 g des eingesetzten Formaldehyds (ca. 7% der Gesamtmenge) gekreuzte Cannizzaro-Reaktionen ein.

Die Viskosität der so hergestellten aldolisierten Formose, die im Rotationsverdampfer auf einen Wassergehalt von 5,2% eingeengt wird, ist weder bei 25°C noch bei 35°C messbar und liegt aufgrund von Extrapolationswerten über 570 000 mPa.s. Bei 50°C ist die Viskosität dieser aldolisierten Formose messbar und beträgt 25 736 mPa.s. Das mittlere Molekulargewicht dieser α-aldolisierten Formose beträgt ca. 198.

Herstellung der erfindungsgemässen Mischungen: Man verfährt mit 50 g der oben beschriebenen Formoselösung nach erfolgter Verdünnung auf einen Wassergehalt von 50% genau nach den Angaben unter a) dieses Beispiels. Man erhält eine modifizierte Formose, die bei einem Wassergehalt von ca. 5,2% bei 25°C eine Viskosität von 104 000 mPa.s besitzt.

Die erfindungsgemässen Mischungen a) und b) können auch dadurch hergestellt werden, dass man die in a) und b) genannten Gewichtsmengen an Formose bzw. α-aldolisierter Formose mit 1 Mol vorgebildetem methyloliertem n-Butyraldehyd der Konstitution

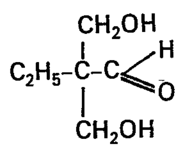

abmischt.

**Patentansprüche**

1. Gegenüber Isocyanaten reaktive Mischungen aus
a) 20 bis 90 Gew.-% (bezogen auf a) + b)) einer Mischung aus mehrwertigen Alkoholen, Hydroxyaldehyden und Hydroxyketonen, welche durch Kondenstion von Formaldehydhydrat aus einer wässrigen Formalinlösung und/oder Paraformaldehyd-Dispersion erhalten wurde,
b) 10 bis 80 Gew.-% (bezogen auf a) + b)) an in α-Stellung methylolierten, nicht zur Endiolbildung befähigten Aldehyden und/oder Ketonen und
c) 0 bis 50 Gew.-% (bezogen auf a) + b)) an Wasser.

2. Gemische nach Anspruch 1, dadurch gekennzeichnet, dass sie
a) 40 bis 75 Gew.-% (bezogen auf a) + b)) einer Mischung aus mehrwertigen Alkoholen, Hydroxyaldehyden und Hydroxyketonen, welche durch Kondensation von Formaldehydhydrat aus einer wässrigen Formalinlösung und/oder Paraformaldehyd-Dispersion erhalten wurde,
b) 25 bis 60 Gew.-% (bezogen auf a) + b)) an in α-Stellung methylolierten, nicht zur Endiolbildung befähigten Aldehyden und/oder Ketonen,
c) 0,3 bis 30 Gew.-%, vorzugsweise 0,8 bis 10 Gew.-% (bezogen auf a) + b)) an Wasser und
d) 0 bis 100 Gew.-%, vorzugsweise 10 bis 50 Gew.-% (bezogen auf a) + b)) an Mono- und/oder Disacchariden enthalten.

3. Verfahren zur Herstellung von Gemischen nach Anspruch 1 oder 2, dadurch gekennzeichnet, dass man 20 bis 65 Gew.-% Formaldehyd enthaltende wässrige Formalinlösungen und/oder Paraformaldehyd-Dispersionen bei pH-Werten zwischen 4 und 9 und bei einer Reaktionstemperatur von 70 bis 110°C in Gegenwart von
a) löslichen oder unlöslichen Salzen von Metallen der zweiten bis vierten Hauptgruppe oder der ersten bis achten Nebengruppe des periodischen Systems der Elemente oder Ionen dieser Metalle, welche an einen hochmolekularen Träger gebunden sind,
b) zur α-Aldolisierung befähigten Aldehyden und/oder Ketonen bzw. deren α-Methylolierungsprodukten sowie gegebenenfalls
c) Cokatalysatoren auf Basis von zur Endiolbildung befähigten Verbindungen
bis zu einem Restformaldehydgehalt von 0 bis 10 Gew.-%, bezogen auf Reaktionsgemisch, kondensiert, anschliessend den Katalysator in an sich bekannter Weise entfernt und das Reaktionsprodukt auf den gewünschten Wassergehalt einengt.

4. Verfahren zur Herstellung von Gemischen nach Anspruch 1 oder 2, dadurch gekennzeichnet, dass man 20 bis 65 Gew.-% Formaldehyd enthaltende wässrige Formalinlösungen und/oder Paraformaldehyd-Dispersionen bei pH-Werten zwischen 4 und 9 bei einer Reaktionstemperatur von 70 bis 110°C in Gegenwart von
a) löslichen oder unlöslichen Salzen von Metallen der zweiten bis vierten Hauptgruppe oder der ersten bis achten Nebengruppe des periodischen Systems der Elemente oder Ionen dieser Metalle, welche an einen hochmolekularen Träger gebunden sind, sowie
b) eines Cokatalysators auf Basis von zur Endiolbildung befähigten Verbindungen

bis zu einem Umsatz von 40 bis 95%, bezogen auf eingesetzten Formaldehyd, zu Gemischen von niedermolekularen mehrwertigen Alkoholen, Hydroxyaldehyden und Hydroxyketonen kondensiert, den Restformaldehyd durch Zusatz von α-aldolisierbarer, nicht zur Endiolbildung befähigter Carbonylverbindungen bindet, und anschliessend das Reaktionsprodukt in an sich bekannter Weise vom Katalysator befreit und auf den gewünschten Wassergehalt einengt.

5. Verfahren zur Herstellung von Gemischen nach Anspruch 1 oder 2, dadurch gekennzeichnet, dass man eine wässrige oder alkoholische Lösung eines Gemisches niedermolekularer, mehrwertiger Alkohole, Hydroxyaldehyde und Hydroxyketone, welches durch Selbstkondensation von Formaldehydhydrat aus einer wässrigen Formalinlösung und/oder Paraformaldehyd-Dispersion erhalten wurde, mit den α-aldolisierbaren Carbonylverbindungen mischt, dann durch Zusatz von wässrigem Formaldehyd methyloliert und gegebenenfalls anschliessend die überschüssige Menge Wasser in an sich bekannter Weise entfernt.

6. Verfahren zur Herstellung von gegebenenfalls zellförmigen Polyurethan-Kunststoffen durch Umsetzung von

A) Polyisocyanaten mit

B) Polyhydroxylverbindungen mit einem Molekulargewicht unter 400, gegebenenfalls

C) Polyhydroxylverbindungen mit einem Molekulargewicht zwischen 400 und 10000 sowie gegebenenfalls weiteren gegenüber Isocyanaten reaktiven Verbindungen, gegebenenfalls in Gegenwart von

D) Treibmitteln, Katalysatoren, Füllstoffen und weiteren an sich bekannten Zusatzstoffen,

dadurch gekennzeichnet, dass als Komponente B) Gemische nach Anspruch 1 oder 2 eingesetzt werden.

## Revendications

1. Mélanges réactifs vis-à-vis des isocyanates et comprenant:

a) 20 à 90% en poids (calculés sur a) + b)) d'un mélange d'hydroxycétones, d'hydroxyaldéhydes et d'alcools polyvalents, que l'on a obtenu par condensation d'hydrate de formaldéhyde à partir d'une dispersion de paraformaldéhyde et/ou d'une solution aqueuse de formaline,

b) 10 à 80% en poids (calculés sur a) + b)) de cétones et/ou d'aldéhydes méthylolés en position α et non susceptibles de former des endiols, et

c) 0 à 50% en poids (calculés sur a) + b)) d'eau.

2. Mélanges suivant la revendication 1, caractérisés en ce qu'ils contiennent:

a) 40 à 75% en poids (calculés sur a) + b)) d'un mélange d'hydroxycétones, d'hydroxyaldéhydes et d'alcools polyvalents, que l'on a obtenu par condensation d'hydrate de formaldéhyde à partir d'une dispersion de paraformaldéhyde et/ou d'une solution aqueuse de formaline,

b) 25 à 60% en poids (calculés sur a) + b)) de cétones et/ou d'aldéhydes méthylolés en position α et non susceptibles de former des endiols,

c) 0,3 à 30% en poids, de préférence, 0,8 à 10% en poids (calculés sur a) + b)) d'eau, et

d) 0 à 100% en poids, de préférence, 10 à 50% en poids (calculés sur a) + b)) de monosaccharides et/ou de disaccharides.

3. Procédé de préparation de mélanges suivant la revendication 1 ou 2, caractérisé en ce qu'on condense des dispersions de paraformaldéhyde et/ou des solutions aqueuses de formaline contenant 20 à 65% en poids de formaldéhyde, à un pH se situant entre 4 et 9 et à une température réactionnelle de 70 à 110 °C en présence:

a) de sels solubles ou insolubles de métaux du deuxième au quatrième groupe principal ou du premier au huitième sous-groupe du Système Périodique des Eléments, ou encore d'ions de ces métaux qui sont fixés sur un support de poids moléculaire élevé,

b) de cétones et/ou d'aldéhydes aptes à l'aldolisation en position α ou de leurs produits de méthylolation en position α, ainsi qu'éventuellement

c) de co-catalyseurs à base de composés aptes à la formation d'endiols,

jusqu'à une teneur résiduelle en formaldéhyde de 0 à 10% en poids, calculés sur le mélange réactionnel, puis on élimine le catalyseur de façon connue en soi et on concentre le produit réactionnel à la teneur souhaitée en eau.

4. Procédé de préparatioin de mélanges suivant la revendication 1 ou 2, caractérisé en ce qu'on condense des dispersions de paraformaldéhyde et/ou des solutions aqueuses de formaline contenant 20 à 65% en poids de formaldéhyde, à un pH compris entre 4 et 9 et à une température réactionnelle de 70 à 110 °C en présence:

a) de sels solubles ou insolubles de métaux du deuxième au quatrième groupe principal ou du premier au huitième sous-groupe du Système Périodique des Eléments, ou d'ions de ces métaux, qui sont fixés sur un support de poids moléculaire élevé, ainsi que

b) d'un co-catalyseur à base de composés aptes à la formation d'endiols,

jusqu'à une transformation de 40 à 95%, calculés sur le formaldéhyde utilisé, pour obtenir des mélanges d'hydroxycétones, d'hydroxyaldéhydes et d'alcools polyvalents de faible poids moléculaire, on fixe le formaldéhyde résiduel par addition de composés carbonyle aldolisables en position α et non susceptibles de former des endiols, après quoi on libère le produit réactionnel du catalyseur de façon connue en soi et on le concentre à la teneur souhaitée en eau.

5. Procédé de préparation de mélanges suivant la revendication 1 ou 2, caractérisé en ce qu'on mélange, avec les composés carbonyle aldolisables en position α, une solution aqueuse ou alcoolique d'un mélange d'hydroxycétones, d'hydroxaldéhydes et d'alcools polyvalents de faible poids moléculaire, mélange que l'on a obtenu par auto-condensation d'hydrate de formaldéhyde à partir d'une dispersion de paraformaldéhyde et/ou d'une solution aqueuse de formaline, puis on effectue une méthylolation par addition de formaldéhyde aqueux et l'on élimine ensuite éventuellement l'excès d'eau de façon connue en soi.

6. Procédé de fabrication de matières synthétiques de polyuréthane éventuellement cellulaires en faisant réagir:
A) des polyisocyanates avec
B) des composés polyhydroxy d'un poids moléculaire inférieur à 400 et éventuellement avec
C) des composés polyhydroxy d'un poids moléculaire se situant entre 400 et 10 000, ainsi qu'éventuellement avec d'autres composés réactifs vis-à-vis des isocyanates, éventuellement en présence
D) d'agents moussants, de catalyseurs, de charges et d'autres additifs connus en soi, caractérisé en ce que, comme composant B), on utilise des mélanges suivant la revendication 1 ou 2.

**Claims**

1. Isocyanate-reactive mixtures of
a) 20 to 90%, by weight (based on a) + b)) of a mixture of polyhydric alcohols, hydroxy aldehydes and hydroxy ketones which has been obtained by the condensation of formaldehyde hydrate from an aqueous formalin solution and/or paraformaldehyde dispersion,
b) 10 to 80% by weight (based on a) + b)) of aldehydes and/or ketones methylolated in the α-position and incapable of endiol formation, and
c) 0 to 50% by weight (based on a) + b)) of water.

2. Mixtures according to Claim 1, characterised in that they contain
a) from 40 to 75% by weight (based on a) + b)) of a mixture of polyhydric alcohols, hydroxy aldehydes and hydroxy ketones which has been obtained by the condensation of formaldehyde hydrate from an aqueous formalin solution and/or paraformaldehyde dispersion,
b) from 25 to 60% by weight (based on a) + b)) of aldehydes and/or ketones methylolated in the α-position and incapable of endiol formation,
c) from 0.3 to 30% by weight, preferably 0.8 to 10% by weight (based on a) + b)) of water and
d) 0 to 100% by weight, preferably 10 to 50% by weight (based on a) + b)) of monosaccharides and/or disaccharides.

3. A process for producing the mixtures according to Claim 1 or 2, characterised in that aqueous formalin solutions and/or paraformaldehyde dispersions containing from 20 to 65% by weight of formaldehyde are condensed at pH-values of from 4 to 9 and at a reaction temperature of from 70 to 110 °C in the presence of
a) soluble or insoluble salts of metals of the Second to Fourth Main Group or of the First to Eighth Secondary Group of the Periodic System of Elements or ions of these metals which are fixed to a high molecular weight support,
b) aldehydes and/or ketones capable of α-aldolation or their α-methylolation products and, optionally,
c) co-catalysts based on compounds capable of endiol formation,
up to a residual formaldehyde content of from 0 to 10% by weight, based on the reaction mixture, the catalyst is subsequently removed in known manner and the reaction product is concentrated to the required water content.

4. A process for producing the mixtures according to Claim 1 or 2, characterised in that aqueous formalin solutions and/or paraformaldehyde dispersions containing from 20 to 65% by weight of formaldehyde are condensed at pH-values of from 4 to 9 at a reaction temperature of from 70 to 110 °C in the presence of
a) soluble or insoluble salts of metals of the Second to Fourth Main Group or the First to Eighth Secondary Group of the Periodic System of Elements or ions of these metals which are fixed to a high molecular weight support, and
b) a co-catalyst based on compounds capable of endiol formation,
up to a conversion of from 40 to 95% by weight, based on the formaldehyde used, to form mixtures of low molecular weight polyhydric alcohols, hydroxy aldehydes and hydroxy ketones, the residual formaldehyde is bound by the addition of α-aldolatable carbonyl compounds incapable of endiol formation and the reaction product is subsequently freed from the catalyst in known manner and concentrated to the required water content.

5. A process for producing the mixtures according to Claim 1 or 2, characterised in that an aqueous or alcoholic solution of a mixture of low molecular weight polyhydric alcohols, hydroxy aldehydes and hydroxy ketones, which has been obtained by the autocondensation of formaldehyde hydrate from an aqueous formalin solution and/or paraformaldehyde dispersion, is mixed with the α-aldolatable carbonyl compounds, subsequently methylolated by the addition of aqueous formaldehyde and, optionally, the excess quantity of water subsequently removed in known manner.

6. A process for the production of optionally cellular polyurethane plastics by reacting
A) polyisocyanates with
B) polyhydroxyl compounds having a molecular weight of less than 400, optionally
C) polyhydroxyl compounds having a molecular weight of from 400 to 10,000 and, optionally, other isocyanate-reactive compounds, optionally in the presence of
D) blowing agents, catalysts, fillers and other additives known per se
characterised in that the mixtures according to Claim 1 or 2 are used as component B).